# EUROPEAN PATENT SPECIFICATION

(11) **EP 3 808 642 B1**
(45) Date of publication and mention of the grant of the patent: **15.05.2024**
(21) Application number: 20201270.4
(22) Date of filing: 12.10.2020
(51) Int. Cl.: B62K 21/26

(54) **BICYCLE HANDLEBAR CUSHIONING SYSTEM**
DÄMPFUNGSSYSTEM FÜR FAHRRADLENKER
SYSTÈME D'AMORTISSEMENT DE GUIDON DE BICYCLETTE

(30) Priority: 15.10.2019 US 201916601989
(43) Date of publication of application: 21.04.2021
(73) Proprietor: GF Holdings, LLC, Eau Claire, WI 54703-1393 (US)
(72) Inventor: Gulotta, Robert K., Eau Claire, WI 54703 (US)
(74) Representative: Hoffmann Eitle

(56) References cited:
- CN-U- 207 657 981
- DE-U1-202009 011 795
- GB-A- 2 511 570
- GB-A- 189 410 625
- TW-A- 200 942 441
- US-A- 4 403 787
- US-A1- 2006 248 683
- US-A1- 2018 362 111

## Description

### Field of the Invention

The disclosure relates to bicycle handlebar cushioning device and more particularly pertains to a new bicycle handlebar cushioning device that allows for interchangeable cushioning members to suit the specific needs of a bicyclist for a given set of circumstances.

### Related Art

The prior art relates to bicycle handlebar cushioning devices to facilitate the comfort of the hands, and more specifically the palm areas, of a bicyclist when the bicyclist is gripping handlebars.

US 2018 0362111 A1, for example, discloses a bicycle handlebar cushioning system according to the preamble of claim 1.

### BRIEF SUMMARY OF THE INVENTION

The invention is defined by the appended claims. An embodiment of the disclosure meets the needs presented above by generally comprising a mount that is contoured such that the mount is complementary in shape to a set of bicycle handlebars. The mount has a perimeter wall having a first end and a second end and is elongated from the first end to the second end. The perimeter wall has an elongated break therein extending between and through the first and second ends. The break receives the handlebars and the mount is resiliently bendable such that the mount snaps onto and frictionally engages the bicycle handlebars. The perimeter wall has an outer surface with an elongated trough therein. At least one cushioning member is provided and includes an insert that is removably positioned in the trough. The insert comprises a resiliently compressible material. A securing member releasably secures a bottom side of the insert to a bottom wall of the trough.

There has thus been outlined, rather broadly, the more important features of the disclosure in order that the detailed description thereof that follows may be better understood, and in order that the present contribution to the art may be better appreciated. There are additional features of the disclosure that will be described hereinafter and which will form the subject matter of the claims appended hereto.

The objects of the disclosure, along with the various features of novelty which characterize the disclosure, are pointed out with particularity in the claims annexed to and forming a part of this disclosure.

### BRIEF DESCRIPTION OF SEVERAL VIEWS OF THE DRAWING(S)

The disclosure will be better understood and objects other than those set forth above will become apparent when consideration is given to the following detailed description thereof. Such description makes reference to the annexed drawings wherein:
- Figure 1: is a top isometric view of a bicycle handlebar cushioning system according to an embodiment of the disclosure including a plurality of cushioning members.
- Figure 2: is a bottom isometric view of an embodiment of the disclosure.
- Figure 3: is a top view of an embodiment of the disclosure.
- Figure 4: is a bottom view of an embodiment of the disclosure.
- Figure 5: is a top, isometric in-use view of an embodiment of the disclosure.
- Figure 6: is a cross-sectional view of an embodiment of the disclosure taken along line 6-6 of Figure 5.
- Figure 7: is are side views of embodiments of securing members of the disclosure.

### DETAILED DESCRIPTION OF THE INVENTION

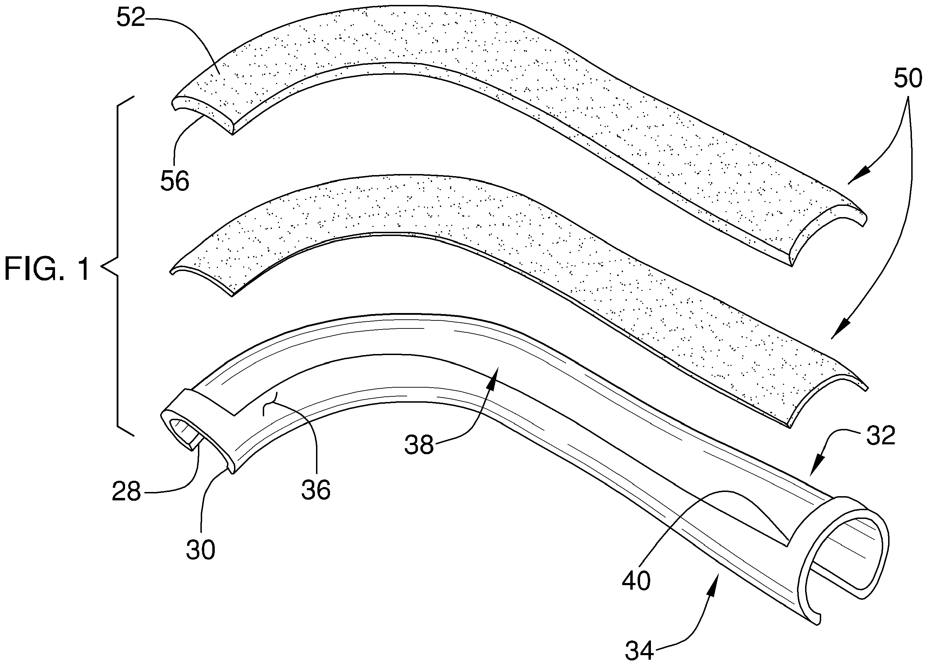

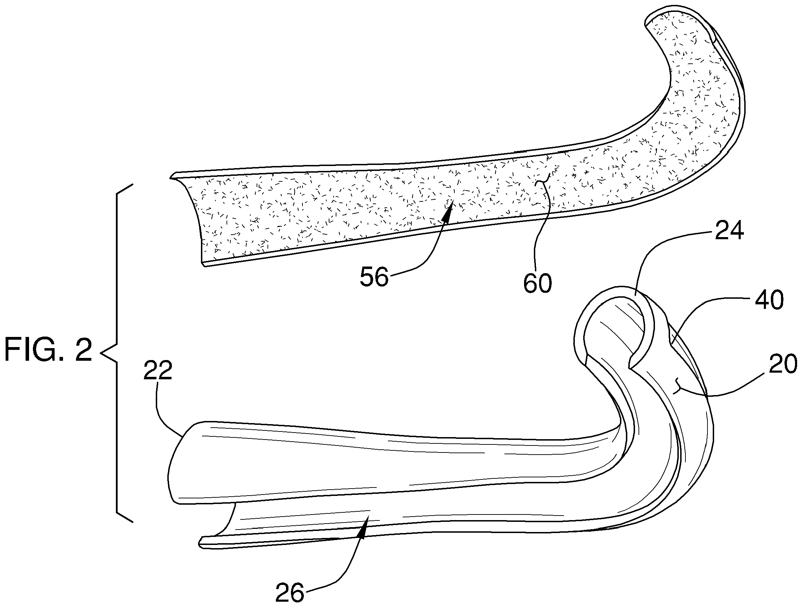

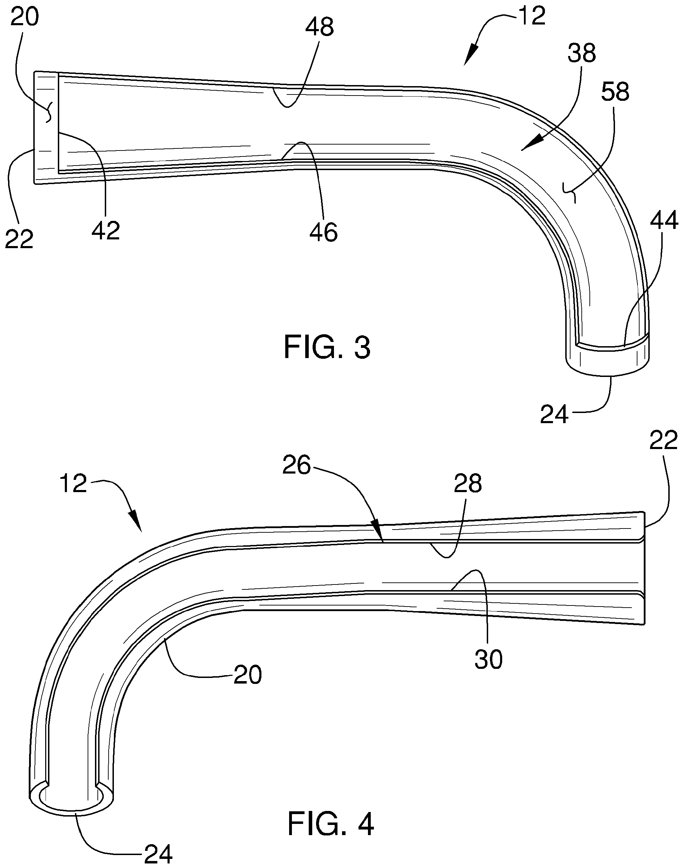

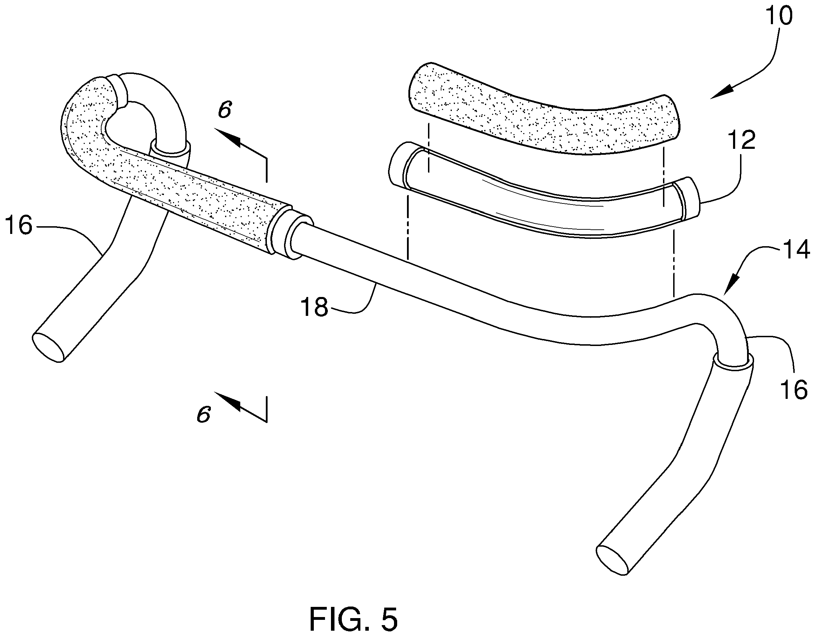

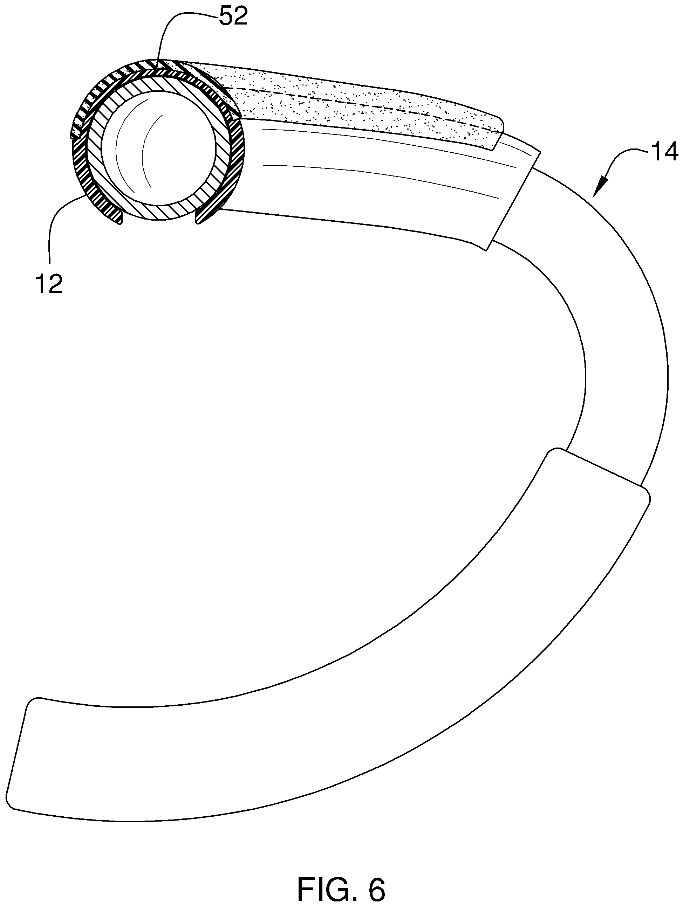

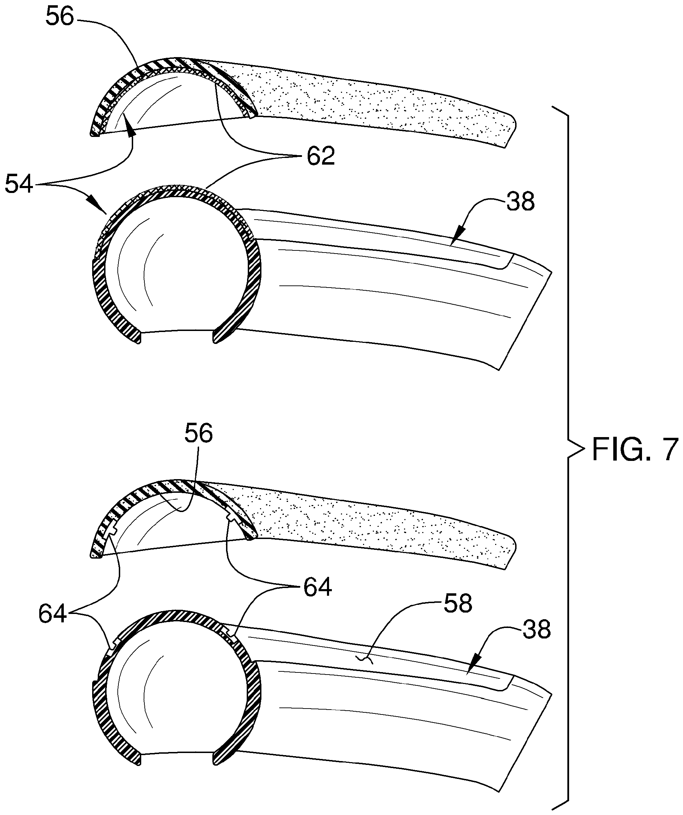

With reference now to the drawings, and in particular to Figures 1 through 7 thereof, a new bicycle handlebar cushioning device embodying an embodiment of the disclosure and generally designated by the reference numeral 10 will be described.

As best illustrated in Figures 1 through 7, the bicycle handlebar cushioning system 10 generally comprises a mount 12 configured to releasably engage and be retained on a set of bicycle handlebars 14. The bicycle handlebars 14 are conventional and may in particular comprise what are known as drop bars 16 used on road bikes such as those found in long distance and race bicycling. These types of bicycle handlebars 14 generally include a stem, not shown, attached to a crosspiece 18 having a pair of opposed ends. To each of the opposed ends is attached a drop, or drop bars 16, which extends forward from the crosspiece 18 and then arcs downwardly and back to form a laterally angled U-shaped structure. The junctures of the crosspiece 18 and the drops 16 are also formed by arcs.

The mount 12 is contoured such that the mount 12 is configured to be complementary in shape to the bicycle handlebars 14. While the handlebars 14 shown in the Figures have a tubular or cylindrical cross-section, it should be understood that handlebars 14 may be provided with a relatively planar upper surface. Regardless, the mount 12 will be contoured as needed to fit the requisite handlebars 14. The mount 12 has a perimeter wall 20 with a first end 22 and a second end 24 and is elongated from the first end 22 to the second end 24. The perimeter wall 20 has an elongated break 26 therein extending between and through the first 22 and second 24 ends. A first free edge 28 of the perimeter wall 20 and a second free edge 30 of the perimeter wall are defined on opposite sides of the break 26. The break 26 is configured to receive the handlebars 14. The mount 12 is comprised of a resiliently bendable material but is sufficiently rigid such that the mount 12 snaps onto and is configured to frictionally engage the bicycle handlebars 14. Materials typically used may include, for example, plastics and carbon composites. The perimeter wall 20 has an upper portion 32 and a lower portion 34 positioned opposite of each other wherein the break 26 is positioned in the lower portion 34.

The perimeter wall 20 has an outer surface 36 having an elongated trough 38 therein. The trough 38 extends from a position adjacent to the first end 22 to a position adjacent to the second end 24. The trough 38 is bounded by a peripheral edge 40. The peripheral edge 40 includes a first edge 42 positioned adjacent to the first end 22, a second edge 44 positioned adjacent to the second end 24. A forward edge 46 and a rearward edge 48 of the trough each extends between the first 42 and second 44 edges. The forward 46 and rearward 48 edges are each spaced from the break 26 a distance greater than 0,635 cm (0.25 inches) and more typically a distance greater than 1,27 cm (0.50 inches). Furthermore, the forward 46 and rearward 48 edges are spaced from each other a distance equal to at least 1,905 cm (0.75 inches).

A plurality of cushioning members 50 is provided to allow an end user to select which cushioning member 50 will be utilized. Each of the cushioning members 50 comprises an insert 52 that is removably positioning in the trough 38. The insert 52 has a size and shape corresponding to the trough 38 such that the insert 52 entirely fills the trough 38. The insert 52 has a greater depth than a depth of the trough 38 such that the insert 52 extends upwardly away from the outer surface 36 of the perimeter wall 20. Typically the trough 38 will have a depth of less than 0,889 cm (0.35 inches). The insert 52 comprises a resiliently compressible material. The resiliently compressible material will most often include a foam material which may further comprise gel foams. Gel foams may be preferred for their ability to retain their shape for short periods after deformation and therefore are more readily apt to contour to a person's palm. A securing member 54 releasably secures a bottom side 56 of the insert 52 to a bottom wall 58 of the trough 38. The securing member 54 may comprise any conventional securing member 54 that readily allows removal of the insert 52 from the trough 38. Some suitable securing members may include adhesives 60, hook and loop fasteners 62 and snaps 64. Should snaps 64 be utilized having first and second mating members, typically the first mating member will be embedded into the bottom wall 58 of the trough 38 while the second mating member will be attached to the bottom side 56 of the insert 52.

As indicated above, there will typically be multiple cushioning members 50 provided to the end user wherein at least two of the cushioning members 50 have a different depth with respect to each other. That is, the cushioning members 50 may be comprised of a same material, but have different depths and therefore provide different cushioning conditions. Alternatively, or in addition, at least two of the cushioning members 50 may comprise a different material, particularly as to its exterior coating, with respect to each other. By altering materials, the user may select not only differing cushioning characteristics but differing tactile experiences. Moreover, the materials may be altered as needed to depending on the ability of the material to transfer heat or absorb perspiration.

In use, a bicyclist selects a mount 12 that matches the shape and contour of their handlebars 14. It should be understood that the bicyclist will use at least two mounts 12 positioned on opposite ends of the crosspiece 18. The mount 12 will extend to the drop bars 16. Additional mounts 12 may be positioned on the drops bars 16 themselves and such an embodiment is fully contemplated by the instant disclosure. Either before or after the user snaps the mount 12 onto the handlebars 14, a cushioning member 50 is selected for particular conditions anticipated by the bicyclist. Thus, the cushioning member 50 may be selected for the amount of cushioning offered, its tactile attributes as well as, optionally, its absorptive properties. The cushioning member 50 may be quickly removed and replaced when worn out or if the bicyclist determines that a cushioning member 50 with different characteristics is warranted. Essentially, the cushioning member 50 provides comfort for the hands of the bicyclist when gripping the handlebars for long durations of time is required. The trough 38 ensures stability of the cushioning member 50 relative to the mount 12 without requiring permanent fixing of the cushioning member 50 to the mount 12.

With respect to the above description then, it is to be realized that the optimum dimensional relationships for the parts of an embodiment enabled by the disclosure, to include variations in size, materials, shape, form, function and manner of operation, assembly and use, are deemed readily apparent and obvious to one skilled in the art, and all equivalent relationships to those illustrated in the drawings and described in the specification are intended to be encompassed by an embodiment of the disclosure.

Therefore, the foregoing is considered as illustrative only of the principles of the disclosure. Further, since numerous modifications and changes will readily occur to those skilled in the art, it is not desired to limit the disclosure to the exact construction and operation shown and described, and accordingly, all suitable modifications and equivalents may be resorted to, if they fall within the scope of the disclosure as defined by the appended claims.

In this patent document, the word "comprising" is used in its non-limiting sense to mean that items following the word are included, but items not specifically mentioned are not excluded. A reference to an element by the indefinite article "a" does not exclude the possibility that more than one of the element is present, unless the context clearly requires that there be only one of the elements.

## Claims

1. A bicycle handlebar cushioning system (10) for a positioning on bicycle handlebars (14), the system comprising:
a mount (12) being contoured such that the mount (12) is configured to be complementary in shape to a set of bicycle handlebars (14), the mount (12) having a perimeter wall (20), the perimeter wall (20) having a first end (22) and a second end (24) and being elongated from the first end (22) to the second end (24), the perimeter wall (20) having an elongated break (26) therein extending between and through the first and second ends (22, 24), wherein the break (26) is configured to receive the handlebars (14), the mount (12) being resiliently bendable such that the mount (12) snaps onto and is configured to frictionally engage the bicycle handlebars (14); and
at least one cushioning member (50);
wherein said at least one cushioning member (50) comprises:
an insert (52) comprising a resiliently compressible material and
a securing member (54);
**characterized in that**
the perimeter wall (20) has an outer surface (36) having an elongated trough (38) therein, the outer surface (36) facing away from the handlebars (14) when the mount (12) is positioned on the handlebars (14), the elongated trough (38) including a bottom wall (58) having a top side facing away from the handlebars (14) when the mount (12) is positioned on the handlebars (14); and
the insert (52) is removably positioned in the trough (38), the bottom wall (58) of the trough (38) is positioned between the insert (52) and
the handlebars (14) when the mount (12) is positioned on the handlebars (14) such that the insert (52) is spaced from the handlebars (14); and
the securing member (54) is releasably securing a bottom side (56) of the insert (52) to the bottom wall (58) of the trough (38).

2. The bicycle handlebar cushioning system (10) according to claim 1, wherein the trough (38) extends from a position adjacent to the first end (22) to a position adjacent to the second end (24).

3. The bicycle handlebar cushioning system (10) according to claim 1 or 2, wherein the trough (38) is spaced from the break (26) a distance greater than 0,635 cm.

4. The bicycle handlebar cushioning system (10) according to any one of the preceding claims, wherein the trough (38) is bounded by a peripheral edge (40), the peripheral edge (40) including a first edge (42) positioned adjacent to the first end (22), a second edge (44) positioned adjacent to the second end (24), a forward edge (46) and a rearward edge (48) each extending between the first and second edges (42, 44), the forward and rearward edges (46, 48) being spaced from each other a distance equal to at least 1,905 cm.

5. The bicycle handlebar cushioning system (10) according to any one of the preceding claims, wherein the insert (52) has a size and shape corresponding to the trough (38) such that the insert (52) entirely fills the trough (38).

6. The bicycle handlebar cushioning system (10) according to any one of the preceding claims, wherein the insert (52) has a greater depth than a depth of the trough (38) such that the insert (52) extends upwardly away from an outer surface (36) of the perimeter wall (20).

7. The bicycle handlebar cushioning system (10) according to any one of the preceding claims, wherein the securing member (54) comprises an adhesive (60).

8. The bicycle handlebar cushioning system (10) according to any one of claims 1 to 6, wherein the securing member (54) comprises snaps (64).

9. The bicycle handlebar cushioning system (10) according to any one of the preceding claims, wherein the cushioning system (10) includes a plurality of the cushioning members (50) .

10. The bicycle handlebar cushioning system (10) according to claim 9, wherein at least two of the cushioning members (50) have a different depth with respect to each other.

11. The bicycle handlebar cushioning system (10) according to claim 9 or 10, wherein at least two of the cushioning members (50) comprise a different material with respect to each other.

## Patentansprüche

1. Dämpfungssystem für Fahrradlenker (10) zur Positionierung auf einem Fahrradlenker (14), wobei das System Folgendes umfasst:
eine Halterung (12), die so umrissen ist, dass die Halterung (12) dazu ausgebildet ist, formkomplementär zu einem Fahrradlenkersatz (14) zu sein, wobei die Halterung (12) eine Umfangswand (20) aufweist, wobei die Umfangswand (20) ein erstes Ende (22) und ein zweites Ende (24) aufweist und vom ersten Ende (22) zum zweiten Ende (24) langgestreckt ist, wobei die Umfangswand (20) eine längliche Unterbrechung (26) darin aufweist, die sich zwischen dem ersten und dem zweiten Ende (22, 24) und durch diese hindurch erstreckt, wobei die Unterbrechung (26) so ausgebildet ist, dass sie den Lenker (14) aufnimmt, wobei die Halterung (12) elastisch biegbar ist, sodass die Halterung (12) an den Fahrradlenker (14) einrastet und so ausgebildet ist, dass sie in Reibungseingriff mit diesem steht;
und mindestens einem Dämpfungselement (50);
wobei das mindestens eine Dämpfungselement (50) Folgendes umfasst:
einen Einsatz (52), der ein elastisch komprimierbares Material umfasst; und
ein Sicherungselement (54);
**dadurch gekennzeichnet, dass**
die Umfangswand (20) eine Außenfläche (36) mit einer länglichen Rinne (38) darin aufweist, wobei die Außenfläche (36) von dem Lenker (14) weg zeigt, wenn die Halterung (12) auf dem Lenker (14) positioniert ist, wobei die längliche Rinne (38) eine Bodenwand (58) mit einer Oberseite einschließt, die von dem Lenker (14) weg zeigt, wenn die Halterung (12) auf dem Lenker (14) positioniert ist; und
der Einsatz (52) herausnehmbar in der Rinne (38) positioniert ist, die Bodenwand (58) der Rinne (38) zwischen dem Einsatz (52) und
dem Lenker (14) positioniert ist, wenn die Halterung (12) auf dem Lenker (14) positioniert ist, sodass der Einsatz (52) von dem Lenker (14) beabstandet ist; und
das Sicherungselement (54) eine Unterseite (56) des Einsatzes (52) lösbar an der Bodenwand (58) der Rinne (38) befestigt.

2. Dämpfungssystem für Fahrradlenker (10) nach Anspruch 1, wobei sich die Rinne (38) von einer Position neben dem ersten Ende (22) zu einer Position neben dem zweiten Ende (24) erstreckt.

3. Dämpfungssystem für Fahrradlenker (10) nach Anspruch 1 oder 2, wobei die Rinne (38) von der Unterbrechung (26) einen Abstand von mehr als 0,635 cm aufweist.

4. Dämpfungssystem für Fahrradlenker (10) nach einem der vorstehenden Ansprüche, wobei die Rinne (38) durch eine Umfangskante (40) begrenzt ist, wobei die Umfangskante (40) eine erste Kante (42), die angrenzend an das erste Ende (22) positioniert ist, eine zweite Kante (44), die angrenzend an das zweite Ende (24) positioniert ist, eine vordere Kante (46) und eine hintere Kante (48), die sich jeweils zwischen der ersten und der zweiten Kante (42, 44) erstrecken, einschließt, wobei die vordere und die hintere Kante (46, 48) in einem Abstand voneinander angeordnet sind, der mindestens 1,905 cm beträgt.

5. Dämpfungssystem für Fahrradlenker (10) nach einem der vorstehenden Ansprüche, wobei der Einsatz (52) eine der Rinne (38) entsprechende Größe und Form aufweist, sodass der Einsatz (52) die Rinne (38) vollständig ausfüllt.

6. Dämpfungssystem für Fahrradlenker (10) nach einem der vorstehenden Ansprüche, wobei der Einsatz (52) eine größere Tiefe als eine Tiefe der Rinne (38) aufweist, sodass sich der Einsatz (52) von einer Außenfläche (36) der Umfangswand (20) nach oben weg erstreckt.

7. Dämpfungssystem für Fahrradlenker (10) nach einem der vorstehenden Ansprüche, wobei das Sicherungselement (54) einen Klebstoff (60) umfasst.

8. Dämpfungssystem für Fahrradlenker (10) nach einem der Ansprüche 1 bis 6, wobei das Sicherungselement (54) Druckknöpfe (64) umfasst.

9. Dämpfungssystem für Fahrradlenker (10) nach einem der vorstehenden Ansprüche, wobei das Dämpfungssystem (10) eine Vielzahl von Dämpfungselementen (50) einschließt.

10. Dämpfungssystem für Fahrradlenker (10) nach Anspruch 9, wobei mindestens zwei der Dämpfungselemente (50) eine unterschiedliche Tiefe im Verhältnis zueinander aufweisen.

11. Dämpfungssystem für Fahrradlenker (10) nach Anspruch 9 oder 10, wobei mindestens zwei der Dämpfungselemente (50) ein anderes Material im Verhältnis zueinander umfassen.

## Revendications

1. Système (10) d'amortissement de guidon de bicyclette pour un positionnement sur des guidons (14) de bicyclette, le système comprenant :
une monture (12) qui est profilée de telle sorte que la monture (12) est configurée pour être de forme complémentaire à un ensemble de guidons (14) de bicyclette, la monture (12) présentant une paroi périphérique (20), la paroi périphérique (20) présentant une première extrémité (22) et une deuxième extrémité (24) et s'allongeant de la première extrémité (22) à la deuxième extrémité (24), la paroi périphérique (20) présentant une cassure allongée (26) s'étendant entre et à travers les première et deuxième extrémités (22, 24), dans lequel la cassure (26) est configurée pour recevoir les guidons (14), la monture (12) pouvant être élastiquement pliée de telle sorte que la monture (12) s'emboîte sur les guidons (14) de bicyclette et est configurée pour venir en prise par frottement avec ceux-ci ;
et au moins un élément d'amortissement (50) ;
dans lequel ledit au moins un élément d'amortissement (50) comprend :
un insert (52) comprenant un matériau élastiquement compressible ; et
un élément de fixation (54) ;
**caractérisé en ce que**
la paroi périphérique (20) présente une surface extérieure (36) renfermant un creux allongé (38), la surface extérieure (36) étant tournée à l'opposé des guidons (14) lorsque la monture (12) est positionnée sur les guidons (14), le creux allongé (38) incluant une paroi de fond (58) présentant un côté supérieur tourné à l'opposé des guidons (14) lorsque la monture (12) est positionnée sur les guidons (14) ; et
l'insert (52) est positionné de manière amovible dans le creux (38), la paroi de fond (58) du creux (38) est positionnée entre l'insert (52) et
les guidons (14) lorsque la monture (12) est positionnée sur les guidons (14) de telle sorte que l'insert (52) est espacé des guidons (14) ; et
l'élément de fixation (54) fixe de manière amovible un côté de fond (56) de l'insert (52) à la paroi de fond (58) du creux (38).

2. Système (10) d'amortissement de guidon de bicyclette selon la revendication 1, dans lequel le creux (38) s'étend depuis une position adjacente à la première extrémité (22) à une position adjacente à la deuxième extrémité (24).

3. Système (10) d'amortissement de guidon de bicyclette selon la revendication 1 ou la revendication 2, dans lequel le creux (38) est espacé de la cassure (26) d'une distance de plus de 0,635 cm.

4. Système (10) d'amortissement de guidon de bicyclette selon l'une quelconque des revendications précédentes, dans lequel le creux (38) est délimité par un bord périphérique (40), le bord périphérique (40) incluant un premier bord (42) positionné de manière adjacente à la première extrémité (22), un deuxième bord (44) positionné de manière adjacente à la deuxième extrémité (24), un bord avant (46) et un bord arrière (48) s'étendant chacun entre les premier et deuxième bords (42, 44), les bords avant et arrière (46, 48) étant espacés l'un de l'autre d'une distance égale à au moins 1,905 cm.

5. Système (10) d'amortissement de guidon de bicyclette selon l'une quelconque des revendications précédentes, dans lequel l'insert (52) présente une taille et une forme correspondant au creux (38) de telle sorte que l'insert (52) remplit entièrement le creux (38).

6. Système (10) d'amortissement de guidon de bicyclette selon l'une quelconque des revendications précédentes, dans lequel l'insert (52) présente une profondeur supérieure à une profondeur du creux (38) de telle sorte que l'insert (52) s'étend vers le haut loin d'une surface extérieure (36) de la paroi périphérique (20).

7. Système (10) d'amortissement de guidon de bicyclette selon l'une quelconque des revendications précédentes, dans lequel l'élément de fixation (54) comprend un adhésif (60).

8. Système (10) d'amortissement de guidon de bicyclette selon l'une quelconque des revendications 1 à 6, dans lequel l'élément de fixation (54) comprend des éléments d'enclenchement (64).

9. Système (10) d'amortissement de guidon de bicyclette selon l'une quelconque des revendications précédentes, dans lequel le système (10) d'amortissement inclut une pluralité des éléments d'amortissement (50).

10. Système (10) d'amortissement de guidon de bicyclette selon la revendication 9, dans lequel au moins deux des éléments d'amortissement (50) présentent une profondeur différente l'un par rapport à l'autre.

11. Système (10) d'amortissement de guidon de bicyclette selon la revendication 9 ou la revendication 10, dans lequel au moins deux des éléments d'amortissement (50) comprennent un matériau différent l'un par rapport à l'autre.
